# EUROPEAN PATENT APPLICATION

(11) **EP 2 281 704 A1**
(43) Date of publication of application: **09.02.2011**
(21) Application number: 09738795.5
(22) Date of filing: 27.04.2009
(51) Int. Cl.: B60H 1/32, F25B 1/00, F25B 41/04

(54) **REFRIGERATION CIRCUIT**

(30) Priority: 30.04.2008 JP 2008118606
(71) Applicant: Sanden Corporation, Isesaki-shi Gunma 372-8502 (JP)
(72) Inventor: KOMATSU Shunji, Isesaki-shi Gunma 372-8502 (JP)
(74) Representative: Prüfer & Partner GbR European Patent Attorneys
(86) International application number: PCT/JP2009/058289
(87) International publication number: WO 2009/133858

(57) **Abstract**

Disclosed is a refrigeration circuit for a vehicle air-conditioning system provided with a compressor, a condenser, a pressure-reduction/expansion means and an evaporator in this order, wherein R1234yf is used as the refrigerant and a shut-off valve for shutting off the circuit based on an excessive acceleration signal of the vehicle is provided in the circuit each of upstream and downstream of the condenser. When the refrigerant used is changed to R1234yf, which is a new-type refrigerant, it is possible to instantaneously minimize refrigerant leakage from the circuit in the event applied with an excessive impact, and to reduce the possibility of a fire starting or the like.

## Description

### Technical Field of the Invention

The present invention relates to a refrigeration circuit of an automotive air conditioning system which can be used safely even when a certain new-type refrigerant is utilized.

### Background Art of the Invention

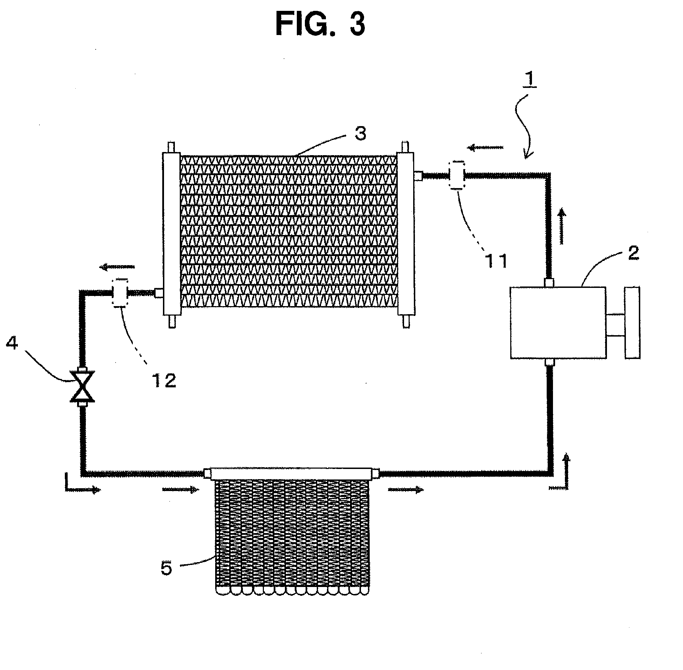

A refrigeration circuit used for an air conditioning system for vehicles has basic configuration as shown in Fig. 3. In Fig. 3, refrigeration circuit 1 is provided with compressor 2 for compressing refrigerant, condenser 3 for condensing compressed refrigerant, expansion valve 4 as a pressure-reduction/expansion means for reducing in pressure as expanding condensed refrigerant, and evaporator 5 for evaporating refrigerant which is reduced in pressure as being expanded. The refrigerant is circulated in refrigeration circuit 1 as changing in state. In such refrigeration circuit 1, a typical refrigerant, such as R134a, is used at present.

Instead of the typical refrigerant such as R134a, research and development to find a new-type refrigerant are being performed in order to improve Global Warming Potential (GWP), as disclosed in non-patent document 1. R1234yf has been announced recently as a new refrigerant aiming at such an improvement, and it is becoming possible that it is examined and studied for applying to refrigeration circuits used for an automotive air conditioning system, etc.

### Prior art documents

### Non-patent documents

Non-patent document 1: Refrigeration, Vol. 83, No. 965, March issue, 2008

### Summary of the Invention

### Problems to be solved by the Invention

Since conventional refrigerant is usually nonflammable, basically combustion preventive measures have not had to be taken against the refrigeration leakage which might be brought when the vehicle is impacted excessively for example. However, molecular structure of the new-type refrigerant R1234yf described above is CF3-CF = CH2 which includes two Hs, and therefore is a little flammable. So it is preferable that a combustion preventive measure is taken in case that a great amount of refrigerant might be leaked.

When the new refrigerant R1234yf is used, if fires derived from R1234yf can be caused they are most likely to break out through the following steps: vehicular crash -> damage or destruction of condenser -> refrigerant leakage -> ignition in the high-temperature engine exhaust manifold. Therefore, this ignition possibility is desired to be reduced.

Accordingly, an object of the present invention is, focusing on such a possibility and demand to prevent from it, to provide a refrigeration circuit of an automotive air conditioning system which can immediately minimize the refrigeration leakage from the circuit caused by an excessive shock, so as to reduce the possibility of fire-breaking when particularly a conventional refrigerant is replaced by the new-type refrigerant R1234yf.

### Means for solving the Problems

To achieve the above described object, a refrigeration circuit according to the present invention is a refrigeration circuit for a vehicle air-conditioning system comprising a compressor for compressing refrigerant, a condenser for condensing compressed refrigerant, a pressure reduction and expansion means for reducing in pressure and expanding condensed refrigerant, and an evaporator for evaporating pressure-reduced and expanded refrigerant in this order, characterized in that R1234yf is used as refrigerant and a shut-off valve for shutting off the circuit based on an excessive acceleration signal of the vehicle is provided at a position in the circuit each of upstream and downstream of the condenser. That makes it possible that an excessive impact is detected as an excessive acceleration signal, and a shut-off valve is operated based on the excessive acceleration signal, so as to shut instantaneously at upstream and downstream positions of the condenser. As described above, the damage or destruction of the condenser is most suspected as a reason of the refrigerant leakage caused by the excessive impact. Therefore even if the condenser is damaged or destructed, the circuit is instantaneously closed at the positions of upstream and downstream thereto, keeping a minimum leakage of refrigerant, so as to prevent from more leakage, or excessive leakage. As a result, the fire-breaking possibility derived from a leak of the new-type refrigerant R1234yf can be minimized, and a desirable purpose can be achieved.

In the refrigeration circuit for a vehicle air-conditioning system according to the present invention, it is possible either that the excessive acceleration signal is a signal from an acceleration sensor mounted on the vehicle or that the excessive acceleration signal is a signal from a collision sensor provided on an airbag.

### Effect according to the Invention

Thus in the refrigeration circuit for a vehicle air-conditioning system, when the refrigerant used is changed to R1234yf, which is a new-type refrigerant, it is possible to instantaneously minimize refrigerant leakage from the circuit in the event applied with an excessive impact, and to reduce the possibility of a fire starting or the like. As a result, it can be promoted to use the new-type refrigerant R1234yf in order to improve the Global Warming Potential (GWP) and so on.

### Brief explanation of the drawings

[Fig. 1] Fig. 1 is a schematic framework showing an example of a control circuit configuration of a refrigeration circuit of a vehicle air-conditioning system according to the present invention.
[Fig. 2] Fig. 2 is a schematic framework showing the circuit in Fig. 1, together with the refrigeration circuit.
[Fig. 3] Fig. 3 is a schematic framework showing a basic equipment layout of a refrigeration circuit of a vehicle air-conditioning system as an object of the present invention.

### Embodiments for carrying out the Invention

Hereinafter, a desirable embodiment of the present invention will be explained as referring to figures.
As described above, the basic equipment layout of the refrigeration circuit of a vehicle air-conditioning system as an object of the present invention is shown in Fig. 3. In the present invention, R1234yf is used as a refrigerant, and shut-off valves 11,12 for shutting off the circuit based on the excessive acceleration signal of the vehicle are provided at positions in the circuit upstream and downstream of condenser 3. It is preferable that shut-off valves 11,12 are electromagnetic valves, such as a normal closed type, a normal opened type.

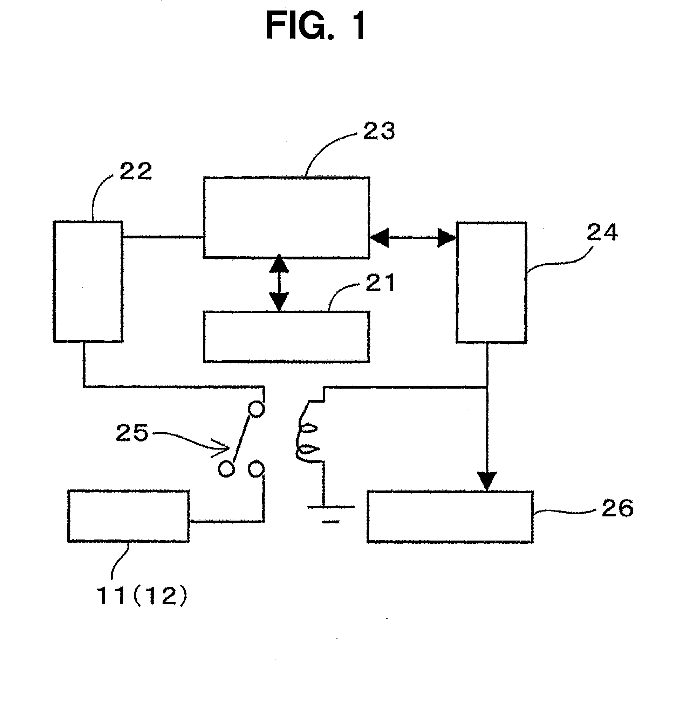

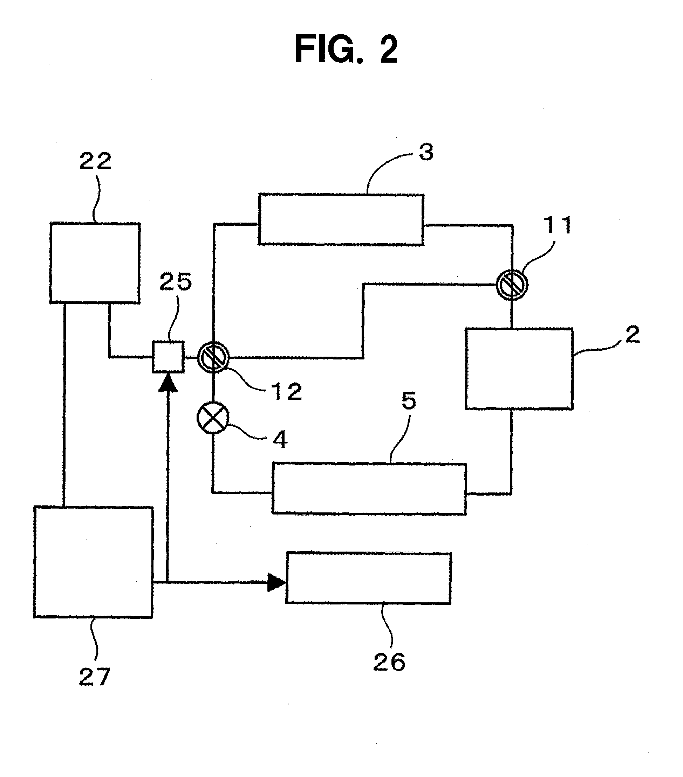

As the excessive acceleration signal, the signal from an acceleration sensor mounted on the vehicle can be used, as well as the signal from a collision sensor provided on an air bag. An example of the control circuitry is shown in Fig. 1 and Fig. 2.

In Fig. 1, symbol 21 implies an acceleration sensor which is mounted on the vehicle, and symbol 22 implies a power source provided on the vehicle. When the excessive acceleration is detected by acceleration sensor 21, the signal is transmitted to microcontroller 23 and processed, so as to be transmitted to electromagnetic drive section 25 of shut-off valves 11 and 12 through output circuit 24. Shut-off valves 11,12 as electromagnetic valves are operated by this signal, and anteroposterior part of the refrigeration circuit of condenser 3 is instantaneously shut, so that the refrigerant leakage can be minimized even if condenser 3 might be damaged. The signal transmitted from output circuit 24 to shut-off valves 11,12 can be used for a signal to operate air bag 26.

As shown in Fig. 2, the signal transmitted from electronic controlling unit 27 including microcontroller 23 and output circuit 24 operates electromagnetic drive section 25, and shut-off valve 11 between compressor 2 and condenser 3, and shut-off valve 12 between condenser 3 and expansion valve 4, are operated to shut, so that the anteroposterior part of refrigeration circuit is cut off instantly.

Consequently, when the new-type refrigerant R1234yf is used, even when impacted excessively the refrigerant leakage from the circuit can be minimized, and the possibility of a fire starting or the like can be kept extremely low. The new-type refrigerant R1234yf is regarded as a superior refrigerant aimed at improvement such as the global warming potential (GWP). The use or examination thereof for the new-type refrigerant R1234yf can be promoted by suppressing the possibility for the fire-outbreak and so on caused by the leak described above.

### Industrial Applications of the Invention

The refrigeration circuit for a vehicle air-conditioning system according to the present invention is applicable basically for every refrigeration circuit for a vehicle air-conditioning system which uses the new-type refrigerant R1234yf.

### Explanation of symbols

- 1:: refrigeration circuit
- 2:: compressor
- 3:: condenser
- 4:: expansion valve as a pressure reduction and expansion means
- 5:: evaporator
- 11,12:: shut-off valve
- 21:: acceleration sensor
- 22:: power source for vehicle
- 23:: microcontroller
- 24:: output circuit
- 25:: electromagnetic drive section
- 26:: air bag
- 27:: electronic controlling unit

## Claims

1. A refrigeration circuit for a vehicle air-conditioning system comprising a compressor for compressing refrigerant, a condenser for condensing compressed refrigerant, a pressure reduction and expansion means for reducing in pressure and expanding condensed refrigerant, and an evaporator for evaporating pressure-reduced and expanded refrigerant in this order, **characterized in that** R1234yf is used as refrigerant and a shut-off valve for shutting off said circuit based on an excessive acceleration signal of said vehicle is provided at a position in said circuit each of upstream and downstream of said condenser.

2. The refrigeration circuit for a vehicle air-conditioning system according to claim 1, wherein said excessive acceleration signal is a signal from an acceleration sensor mounted on said vehicle.

3. The refrigeration circuit for a vehicle air-conditioning system according to claim 1, wherein said excessive acceleration signal is a signal from a collision sensor provided on an airbag.
